## Europäisches Patentamt

## European Patent Office

## Office européen des brevets

(19)

(11) Veröffentlichungsnummer : **0 082 239**
**B1**

(12) **EUROPÄISCHE PATENTSCHRIFT**

(45) Veröffentlichungstag der Patentschrift :
**18.09.85**

(51) Int. Cl.⁴ : **F 16 J 15/32**

(21) Anmeldenummer : **82103475.8**

(22) Anmeldetag : **24.04.82**

(54) **Radialwellendichtring.**

(30) Priorität : **19.12.81 DE 3150472**

(43) Veröffentlichungstag der Anmeldung :
**29.06.83 Patentblatt 83/26**

(45) Bekanntmachung des Hinweises auf die Patenterteilung : **18.09.85 Patentblatt 85/38**

(84) Benannte Vertragsstaaten :
**AT DE FR GB IT SE**

(56) Entgegenhaltungen :
**DE-A- 2 835 359**
**DE-C- 901 976**
**GB-A- 416 854**
**GB-A- 613 460**
**GB-A- 1 164 819**

(73) Patentinhaber : **Firma Carl Freudenberg**
**Höhnerweg 2**
**D-6940 Weinheim/Bergstrasse (DE)**

(72) Erfinder : **Hölzer, Helmut**
**Hegelstrasse 15**
**D-6940 Weinheim (DE)**
Erfinder : **Ehrmann, Peter**
**Regerstrasse 11**
**D-6944 Hemsbach (DE)**

(74) Vertreter : **Weissenfeld-Richters, Helga, Dr.**
**Höhnerweg 2**
**D-6940 Weinheim/Bergstrasse (DE)**

EP 0 082 239 B1

## Beschreibung

Die Erfindung betrifft einen Radialwellendichtring mit einem trompetenähnlich ausgebildeten Dichtelement aus polymeren Werkstoff, das eine gleichbleibende Wandstärke aufweist, das im Bereich des Außenumfanges in einem Haltering verankert ist, das im Bereich des Innen unfanges vogenförmig ist, und das die Welle mit einer umlaufenden Kontaktfläche berührt, wobei die freie, axial in Richtung des abgedichteten Mediums weisende Endfläche des Dichtelementes Drallrippen aufweist.

Auf einen Radialwellendichtring der vorgenannten Art nimmt ·die DE-A-2 835 359 bezug. Dieser ist mit einem Dichtelement versehen, das mit einer gebogten Dichtkante schlangenlinienförmig am Außenumfang der abgedichteten Welle anliegt.

Ein starker Verschleiß der Dichtkante ist hiervon die Folge und insbesondere beim Auftre· ten radialer Wellenverlagerungen zu beobachten.

Ein ähnlich ausgebildeter Radialwellendichtring wird in der DE-A-2 339 353 beschrieben. Die Rückseite des Dichtelementes weist in diesem Falle frei abstehende Faserenden auf, die in Richtung des abgedichteten Mediums orientiert sind. Die Faserenden liegen im Bereich der Kontaktfläche auf der abgedichteten Welle auf und werden unter dem Einfluß der Reibung bei einer Drehbewegung seitlich abgelenkt, wodurch ein die Abdichtwirkung begünstigender, dynamischer Rückfördereffekt auf das in die Dichtungszone eindringende, abgedichtete Medium ausgeübt wird. Bei Wellenstillstand kommt der diesbezügliche Effekt zum Erliegen und eine unerwünschte Leckage kann die Folge sein.

Die Wirksamkeit wird außerdem maßgeblich davon beeinflußt, daß die Faserenden neben einer guten Beweglichkeit eine gewisse Elastizität aufweisen. Beide Eigenschaften sind maßgeblich von dem zur Verfügung stehenden Faserquerschnitt abhängig, und sie erfahren insofern eine Beeinträchtigung, wenn sich diesbezüglich eine Verminderung infolge eintretenden Verschleißes ergibt. Die Benutzung von Radialwellendichtringen dieser Art ist insofern zwangsläufig mit einer sich stetig vermindernden, dynamischen Abdichtwirkung während der Gebrauchsdauer verbunden, was ebenfalls nicht erwünscht ist.

Aus der GB-A-416 854 ist ein Dichtring mit einer im Profil senkrecht abgewinkelten Dichtlippe bekannt, die im vorspringenden Teil einen Abstand von der relativ bewegten Fläche aufweist. Hydrodynamisch wirkende Rückförderelemente für Leckflüssigkeit werden nicht erwähnt.

Der Erfindung liegt die Aufgabe zugrunde, einen einfach herzustellenden Radialwellendichtring zu zeigen, der sich auch beim Auftreten radialer Wellenverlagerungen durch einen geringen Verschleiß sowie durch eine gute Wirksamkeit in statischer und dynamischer Hinsicht auszeichnet, wobei die Wirksamkeit während der gesamten Gebrauchsdauer eine nennenswerte Veränderung nicht erfährt.

Diese Aufgabe wird erfindungsgemäß bei einem Radialwellendichtring der eingangs genannten Art dadurch gelöst, daß das Dichtelement in Richtung des abgedichteten Mediums über die Kontaktfläche (A) hinaus verlängert ist, daß es im .vorspringenden Teil (B) einen sich erweiternden Innendurchmesser aufweist und daß die axiale Höhe der Drallrippen im wesentlichen mit der axialen Erstreckung der Verlängerung des Dichtelementes übereinstimmt.

Das Dichtelement des vorgeschlagenen Radialwellendichtringes liegt im Bereich der Kontaktfläche nur mit einer geringen spezifischen Flächenpressung auf der abgedichteten Welle auf, die sich in axialer Richtung beiderseits von einer mittleren Zone höchsten Druckes kontinuierlich vermindert bis zum völligen Abheben des Dichtelementes von der abgedichteten Welle. Beiderseits schließt insofern an die eigentliche Kontaktfläche ein sich stetig erweiternder Spalt an und insofern eine kapillare Wirksamkeit, die in der Zone höchsten Druckes ihren Maximalwert erreicht, welcher in axialer Richtung beiderseits kontinuierlich auf 0 abfällt. Der Schmiermittelfilm im Bereich der Kontaktfläche zeichnet sich aus diesem Grunde durch eine besonders große mechanische Widerstandsfähigkeit aus, die zuverlässig verhindert, daß es zu einem unmittelbaren Reibungskontakt zwischen der mit einem Schmieröl benetzten Wellenoberfläche und dem Dichtelement kommt. Der Verschleiß des vorgeschlagenen Radialwellendichtringes ist wahrscheinlich im wesentlichen aus diesem Grunde außerordentlich gering. Er ist darüber hinaus relativ unempfindlich gegenüber radialen Wellenbewegungen und -schwingungen sowie gegeg eine stärkere Schmutzbelastung.

Der Schmiermittelfilm im Bereich der Dichtungszone erfährt infolge der in axialer Richtung anschließenden Teilzonen eines unterschiedlichen Druckes bei laufender Welle eine ständige Umwälzung in sich selbst, die sowohl axial gerichtete als auch radial gerichtete Strömungen in sich einschließt. Der Schmiermittelfilm wird hierdurch kontinuierlich aus dem Reservoir des abgedichteten Mediums erneuert, wodurch Zersetzungserscheinungen, wie beispielsweise bei unzureichender Temperaturabführung zu befürchten, auch bei hohen Wellendrehzahlen weitgehend ausgeschlossen sind.

Das Dichtelement weist auf der freien, axial weisenden Endfläche Drallrippen auf. Die Drallrippen können kontinuierlich oder diskontinuierlich ineinander übergehend ausgebildet sein, und sie lassen sich auf besonders einfache Weise erhalten durch Verwendung eines Dichtelementes in Gestalt einer kreisringförmigen Scheibe mit planparallelen Oberflächen, deren Aussparung ein stern- oder kurvenförmig begrenztes Profil aufweist. Nach der trompetenartigen Aufweitung und Vorwölbung des Innendurchmessers erfahren solche Drallrippen eine richtungsmäßige Umorientierung in axialer Richtung. Sie vermögen infolgedessen keinerlei unmittelbaren Einfluß auf den Druck des Schmiermittelfilmes innerhalb der eigentlichen Dichttungszone auszuüben. Sie entlasten die Dichtungszone jedoch in einer günstigen Weise von einer Druckbeaufschlagung durch das abgedichtete Medium, so daß auch bei diesbezüglich wechselnden Drücken im Bereich der eigentlichen Dichtungszone stets gleichbleibende Druck- und Schmierungsverhältnisse gewährleistet sind.

Die Höhe der Drallrippen stimmt im wesentlichen mit der axialen Erstreckung der Verlängerung des Dichtelementes überein. Aus einer entsprechenden Ausführung resultiert beim Einbau eine selbsttätige, stetige Erweiterung des Innendurchmessers des Dichtelementes im Bereich der Verlängerung. Die bei anderen Ausführungen erforderliche, spezielle Formgebung des Dichtelementes in diesem Bereich kann somit entfallen. Der Winkel, den die einander gegenüberliegenden Flächen der Verlängerung bei eingebautem Dichtring untereinander einschließen, soll 0.5 bis 20 ° betragen. Besonders vorteilhaft ist der Bereich zwischen 3 und 6°.

Sowohl die Kontaktfläche als auch die in axialer Richtung beiderseits daran anschließenden Bereiche des Dichtringes sind bevorzugt glattflächig ausgebildet und gehen gleichmäßig ineinander über. Der für die statische und für die dynamische Abdichtwirkung wesentliche Spalteffekt wird hierdurch stark begünstigt. Wechselwirkungen zwischen dem abgedichteten Medium und der Umgebung durch die Dichtungszone hindurch, wie bei anderen, dynamisch wirksamen Dichtringen häufig zu beobachten, werden hierdurch wirksam unterbunden. Auch bei hohen Wellendrehzahlen wird weder Schmieröl durch den Dichtungsspalt hindurch nach außen befördert, noch Staub aus der Umgebung durch den Dichtungsspalt hindurch in den abgedichteten Raum.

Das Dichtelement hat vorzugsweise eine gleichbleibende Wandstärke. Es läßt sich bei einer entsprechenden Ausführung durch einfaches Ausstanzen aus einem flächen-haften Material erhalten, beispielsweise aus einer Bahn aus Gummi oder PTFE.

Der Gegenstand der vorliegenden Erfindung wird nachfolgend anhand der in der Anlage beigefügten Zeichnungen näher erläutert. Es zeigen :

Figur 1 einen Radialwellendichtring mit einem einseitig, trompetenartig vorgewölbten und aufgeweiteten Dichtelement, das eine die abgedichtete Welle rotationssymmetrisch umschließende, axial weisende Endfläche aufweist, die durch Drallrippen unterbrochen ist.

Figur 2 den Radialwellendichtring nach Figur 1 in perspektivischer Darstellung zur Verdeutlichung der in axialer Richtung zeigenden Drallringen.

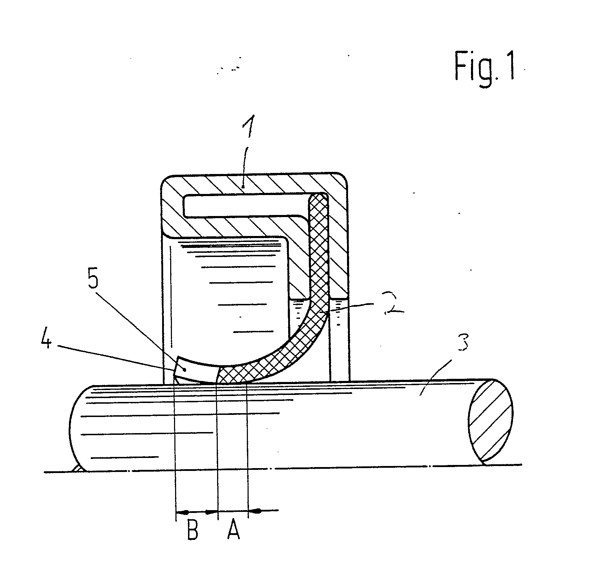

Der Radialwellendichtring nach Figur 1 enthält einen Versteifungsring 1 aus Stahlblech, dessen nach innen weisende Schenkel auf der Oberfläche des scheibenförmigen Dichtelementes 2 aufliegen. Das scheibenförmige Dichtelement besteht aus Gummi. Es hat eine kreisringförmige Gestalt und wurde durch Ausstanzen aus einem ebenen Bahnenmaterial mit einer Härte Shore A von 72 erhalten.

Der Innendurchmesser des scheibenförmigen Dichtelementes ist einseitig in Richtung des abgedichteten Mediums vorgewölbt und in radialer Richtung aufgeweitet. Die Aufweitung wurde so vorgenommen, daß das Dichtelement 2 die abgedichtete Welle 3 nur im Bereich der Kontaktfläche A berührt. Diese hat einen axialen Abstand B von der Grundfläche 4. Die Kontaktfläche und die sich in axialer Richtung beiderseits daran anschließenden Flächen des Dichtelementes sind glattflächig ausgeführt und gehen mit einer Krümmung kontinuierlich ineinander über. Bei einer Benetzung der abgedichteten Welle 3 mit Schmieröl werden hierdurch im Bereich der Zone A erhebliche Kapillarkräfte wirksam, die zur Ausbildung eines stabilen Schmiermittelfilmes führen. Der sich auf der druckabgewandten Seite an die Kontaktfläche anschließende Teil des Dichtelementes ist zweckmäßigerweise weniger stark gekrümmt als der zugehörige Teil auf der dem abgedichteten Medium zugewandten Seite. Das Verhältnis aus dem jeweiligen Radius soll 1 : 5 betragen, vorzugsweise 1 : 3.

Die axial weisende, freie Endfläche 4 des Dichtelementes ist durch eine Vielzahl gleichmäßig auf dem Umfang verteilter Drallrippen 5 durchbrochen. Die Drallrippen haben, auf den Umfang gesehen, ein sinusförmiges Profil und gehen gleichmäßig ineinander über. Die axiale Höhe der Drallrippen stimmt im vesentlichen mit der axialen erstreckung B der Verlängerung des Dichtelementes überein. Sie schließen mit der Rotationsachse und der Richtung des abgedichteten Mediums einen stumpfen Winkel von 90,5 bis 110° ein, vorzugsweise von 93 bis 95°. Hierdurch wird einer Beeinflussung der Strömungsverhältnisse im Dichtspalt bei wechselnden Drücken des abgedichteten Mediums wirksam begegnet.

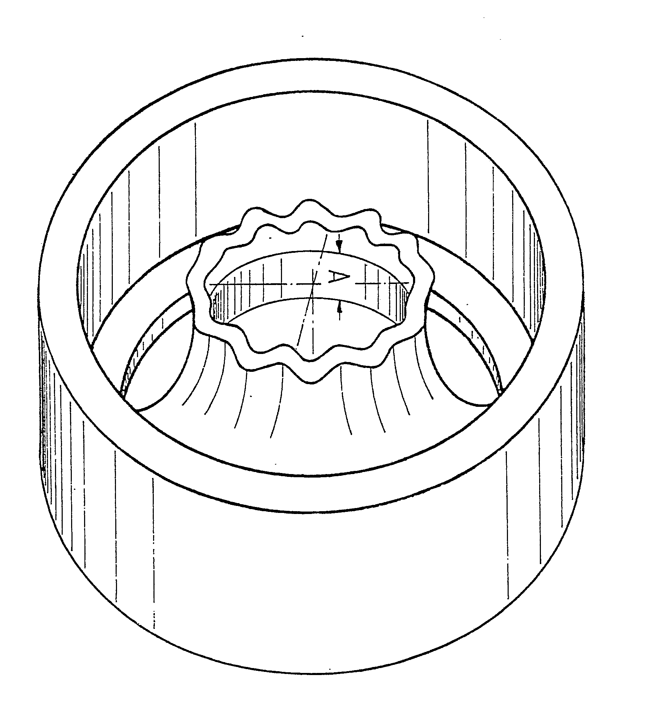

Figur 2 dient der weiteren Verdeutlichung einer Ausführung nach Figur 1. Es ist erkennbar, daß die Drallrippen negativ geneigt sind. Der Rückfördereffekt ist nur in axialer Richtung wirksam und kann einen Einfluß auf die Druck- und Strömungsverhältnisse im Bereich der Kontaktfläche A des Dichtelementes mit der abgedichteten Welle nicht haben.

## Patentansprüche

1. Radialwellendichtring mit einem trompetenähnlich ausgebildeten Dichtelement (2) aus polymerem Werkstoff, das eine gleichbleibende Wandstärke aufweist, das im Bereich des Außenumfanges in einem Haltering (1) verankert ist, das im Bereich des Innenumfanges bogenförmig gewölbt ist, und das die Welle (3) mit einer umlaufenden Kontaktfläche (A) berührt, wobei die freie, axial in Richtung des abgedichteten Mediums weisende Endfläche (4) des Dichtelementes Drallrippen (5) aufweist, dadurch gekennzeichnet, daß das Dichtelement (2) in Richtung des abgedichteten Mediums über die Kontaktfläche (A) hinaus verlängert ist, daß es im vorspringenden Teil (B) einen sich erweiternden Innendurchmesser aufweist und daß die axiale Höhe der Drallrippen (5) im wesentlichen mit der axialen Erstreckung der Verlängerung des Dichtelementes übereinstimmt.

2. Radialwellendichtring nach Anspruch 1, dadurch gekennzeichnet, daß die Drallrippen (5) ineinander übergehend ausgebildet sind.

3. Radialwellendichtring nach Anspruch 1 bis 2, dadurch gekennzeichnet, daß der Innendurchmesser des Dichtelementes (2) im Bereich der Verlängerung stetig erweitert ist.

4. Radialwellendichtring nach Anspruch 3, dadurch gekennzeichnet, daß der Winkel, den die einander gegenüberliegenden Flächen der Verlängerung bei eingebautem Dichtring untereinander einschließen, 0,5 bis 20° beträgt.

5. Radialwellendichtring nach Anspruch 1 bis 4, dadurch gekennzeichnet, daß die Kontaktfläche (A) und die in axialer Richtung beiderseits daran anschließenden Bereiche des Dichtringes glattflächig ausgebildet sind und gleichmäßig ineinander übergehen.

6. Radialwellendichtring nach Anspruch 1 bis 5, dadurch gekennzeichnet, daß die Drallrippen mit der Rotationsachse und der Richtung des abgedichteten Mediums einen winkel von 90,5 bis 110° einschließen.

7. Radialwellendichtring nach Anspruch 5 - 6, dadurch gekennzeichnet, daß die Kontaktfläche und die in axialer Richtung anschließenden Bereiche gekrümmt sind und gleichmäßig ineinander übergehen.

8. Radialwellendichtring nach Anspruch 7, dadurch gekennzeichnet, daß die Krümmung des dem abgedichteten Medium zugewandten Bereiches einen kleiner Radius aufweist als die Krümmung des druckabgewandten Bereiches.

## Claims

1. A radial lip seal having a sealing element (2) which is designed in the shape of a trumpet, is made of a polymer material, has a uniform wall thickness, is anchored in a retaining ring (1) in the area of the outer periphery, has a curved shape in the area of the inner periphery and contacts the shaft (3) by an encircling contact surface (A), with the free end surface of the sealing element pointing axially in the direction of the sealed medium and having helical ribs (5), characterised in that the sealing element (2) is elongated beyond the contact surface (A) in the direction of the sealed medium, that it has a widening inside diameter in the projecting part (B) and that the axial width of the helical ribs (5) essentially corresponds to the axial extension of the elongation of the sealing element.

2. A radial lip seal according to claim 1, characterised in that the helical ribs (5) are designed so as to merge into one another.

3. A radial lip seal according to claim 1 or 2, characterised in that the inside diameter of the sealing element (2) is steadily widened in the area of the elongation.

4. A radial lip seal according to claim 3, characterised in that the angle which is enclosed between the opposite faces of the elongation when the sealing ring is fitted is 0.5 to 20°.

5. A radial lip seal according to any of claims 1 to 4, characterised in that the contact surface (A) and the sealing ring areas adjoining both sides of the contact surface (A) in the axial direction are smooth-surfaced and merge uniformly into one another.

6. A radial lip seal according to any of claims 1 to 5, characterised in that the helical ribs enclose an angle of 90.5 to 110° with the rotational axis and the direction of the sealed medium.

7. A radial lip seal according to claim 5 or 6, characterised in that the contact surface and the areas adjoining the contact surface in the axial direction are curved and merge uniformly into one another.

8. A radial lip seal according to claim 7, characterised in that the curvature of the area facing towards the sealed medium has a smaller radius than the curvature of the area facing away from the pressure.

## Revendications

1. Joint d'étanchéité radial d'arbre avec un élément d'étanchéité (2) disposé en forme de trompette et réalisé en matériau polymère, qui présente une épaisseur de paroi constante, qui est fixé dans un anneau de maintien (1) dans la zone de sa périphérie extérieure, qui est cintré en arc dans la zone de sa périphérie intérieure et qui vient au contact de l'arbre (3) en direction du fluide à contenir, avec une surface de contact mobile (4), la surface d'extrémité libre (4) orientée radialement de l'élément d'étanchéité présentant des nervures de torsion (5), caractérisé en ce que l'élément d'étanchéité (2) se prolonge en direction du fluide à contenir au-delà de la surface de contact (A), en ce que la partie en saillie (B) présente un diamètre intérieur qui s'élargit et en ce que la hauteur axiale des nervures de torsion (5) correspond essentiellement à l'extension axiale du prolongement de l'élément d'étanchéité.

2. Joint d'étanchéité radial d'arbre selon la revendication 1, caractérisé en ce que les nervures de torsion (5) sont conçues pour se prolonger l'une l'autre.

3. Joint d'étanchéité radial d'arbre selon les revendications 1 et 2, caractérisé en ce que le diamètre intérieur de l'élément d'étanchéité (2) augmente continuellement dans la zone du prolongement.

4. Joint d'étanchéité radial d'arbre selon la revendication 3, caractérisé en ce que l'angle inclus entre les surfaces du prolongement avec joint incorporé qui se font face, est de 0,5 à 20°.

5. Joint d'étanchéité radial d'arbre selon les revendications 1 à 4, caractérisé en ce que la surface de contact (A) et les zones adjacentes de part et d'autre à celle-ci en direction axiale du joint d'étanchéité ont une surface lisse et se prolongent uniformément l'une l'autre.

6. Joint d'étanchéité radial d'arbre selon les revendications 1 à 5, caractérisé en ce que les nervures de torsion font, avec l'axe de rotation et la direction du fluide à contenir, un angle de 90,5 à 110°.

7. Joint d'étanchéité radial d'arbre selon les revendications 5-6, caractérisé en ce que la surface de contact et la zone adjacente en direction axiale sont cintrées avec transition régulière de l'une à l'autre.

8. Joint d'étanchéité radial d'arbre selon la revendication 7, caractérisé en ce que la courbure de la zone tournée vers le fluide à contenir présente un plus petit rayon que la courbure de la zone opposée à la pression.

Fig.1